# EUROPÄISCHE PATENTANMELDUNG

(11) **EP 1 079 414 A2**
(43) Veröffentlichungstag der Anmeldung: **28.02.2001**
(21) Anmeldenummer: 00202911.4
(22) Anmeldetag: 16.08.2000
(51) Int. Cl.: H01J 29/89

(54) **Farbbildschirm mit Farbfilter**

(30) Priorität: 25.08.1999 DE 19940195
(71) Anmelder: Philips Corporate Intellectual Property GmbH, 52064 Aachen (DE); Koninklijke Philips Electronics N.V., 5621 BA Eindhoven (NL)
(72) Erfinder: Opitz, Joachim, Philips Corporate Intellectual, 52064 Aachen (DE); Gruhike, Stefan, Philips Corporate Intellectual, 52064 Aachen (DE); Gläser, Harald, Philips Corporate Intellectual, 52064 Aachen (DE); Bechtel, Helmut, Philips Corporate Intellectual, 52064 Aachen (DE)
(74) Vertreter: Volmer, Georg, Dipl.-Ing.

(57) **Zusammenfassung**

Die Erfindung beschreibt einen Farbbildschirm mit einem Farbfilter aus Farbmittel-Partikeln und kolloidalen Teilchen zwischen Bildschirmglas und Leuchtstoffschicht. Durch Einbettung der Farbmittel-Partikel in eine kolloidale Matrix können auch Farbmittel-Partikel mit einer Partikelgröße über 200 nm in Farb- bzw. Graufilterschichten verwendet werden. Die kolloidale Matrix enthält Teilchen ausgewählt aus der Gruppe SiO₂, ZrO₂, SnO₂, CeO₂ und ZnO mit einem bevorzugten Teilchendurchmesser zwischen 10 und 50 nm.

## Beschreibung

Die Erfindung betrifft einen Farbbildschirm, insbesondere für eine Farbbildröhre, einen Farbmonitor oder einen Plasmadisplay, mit einem Bildschirmglas, einer Leuchtstoffschicht und einem Farbfilter zwischen Bildschirmglas und Leuchtstoffschicht.

Farbbildschirme und Farbmonitore werden häufig in hellem Umgebungslicht benutzt. Um das Schirmbild bei dieser Beleuchtung besser sichtbar zu machen und um die Augen weniger zu ermüden, soll ihr Bildschirm blendfrei, reflexionsarm und kontrastreich sein.

Eine Erhöhung des Kontrastes kann man zum Beispiel durch Farbfilter in Form anorganischer Pigmente erreichen, die so ausgewählt werden, daß sie für die vom jeweiligen Leuchtstoff emittierte Farbe möglichst transparent sind und die restlichen Spektralanteile absorbieren. Aufgebracht werden diese Farbfilter als separate Schichten zwischen den Leuchtstoffen und dem Bildschirm. So werden die grünen und blauen Komponenten des einfallenden Umgebungslichtes von einem roten Pigment, die blauen und roten Komponenten von einem grünen Pigment und die grünen und roten Komponenten von einem blauen Pigment absorbiert. Außerdem verbessern diese transparenten Farbfilter die Farbreinheit des vom Leuchtstoff emittierten Lichtes.

Auch durch Verwendung sogenannter Grau- oder Neutralfilter, die einen gleichförmigen Durchlässigkeitsgrad im Bezug auf das von den roten, blauen und grünen Leuchtstoffen ausgestrahlte bzw. auf das einfallende sichtbare Licht haben, wird eine Erhöhung des Kontrastes erreicht.

Um eine unerwünschte Streuung des sichtbaren Lichtes durch die Pigmente zu verhindern, wird in EP 0 720 201 A1 beschrieben, daß nur Pigmente mit einem Teilchendurchmesser kleiner als 200 nm zu verwendet werden.

Es ist die Aufgabe der vorliegenden Erfindung, einen Farbbildschirm mit einem verbesserten Farbfilter zur Verfügung zu stellen, der ein kontrastreiches Bild liefert und eine gute Emissionsfarbqualität aufweist.

Die Aufgabe wird gelöst, durch einen Farbbildschirm mit einem Bildschirmglas, einer Leuchtstoffschicht und einem Farbfilter zwischen Bildschirmglas und Leuchtstoffschicht, dadurch gekennzeichnet, daß der Farbfilter Farbmittel-Partikel mit einem Teilchendurchmesser größer 200 nm zusammen mit kolloidalen Teilchen mit einem Teilchendurchmesser kleiner 100 nm enthält.

Die Farbmittel-Partikel mit einem Teilchendurchmesser größer 200 nm werden in eine kolloidale Matrix, die aus Teilchen mit einem Teilchendurchmesser kleiner 100 nm besteht, eingebettet. Da der Teilchendurchmesser der kolloidalen Teilchen deutlich kleiner als die Wellenlänge des sichtbaren Lichtes ist, sind die erhaltenen Farbfilter dadurch transparent.

Es ist besonders bevorzugt, daß die kolloidalen Teilchen einen Teilchendurchmesser zwischen 10 und 50 nm aufweisen.

Es ist bevorzugt, daß die kolloidalen Teilchen einen Brechungsindex n_{D} > 1.4 aufweisen.

Die Räume zwischen den Farbmittel-Partikeln in einem Farbfilter werden mit einem transparenten Material gefüllt, so daß der Brechungsindex der Zwischenräume an den Brechungsindex der Farbmittel-Partikel angeglichen wird. Diese Anpassung des Brechungsindex reduziert wesentlich die Lichtstreuung in der Schicht.

Es kann bevorzugt sein, daß die kolloidalen Teilchen Metalloxide enthalten.

Metalloxide weisen einen hohen Brechungsindex als kolloidale Teilchen und eine hohe Temperaturstabilität auf. Außerdem sind sie stabil gegenüber Elektronenstrahlen, wie sie bei Verwendung des Farbbildschirms in einer Farbkathodenstrahlröhre auftreten.

Es ist weiterhin bevorzugt, daß die Metalloxide ausgewählt aus der Gruppe SiO₂, ZrO₂, SnO₂, CeO₂ und ZnO sind.

Viele der geeigneten Metalloxide sind kommerziell als wäßrige Sole erhältlich. Andere kolloidale Teilchen sind als Pulver verfügbar und werden durch Dispergieren in Wasser in kolloidale Sole überführt.

Es ist bevorzugt, daß die Farbmittel-Partikel aus der Gruppe der anorganischen Pigmente, der organischen Pigmente, der anorganischen Farbstoffe und der organischen Farbstoffe ausgewählt sind.

Die Farbmittel-Partikel werden so ausgewählt, daß ihr Absorptionsspektrum auf die Emissionsbanden des jeweils eingesetzten Leuchtstoffes eingestellt ist. Die Erweiterung der Auswahl an geeigneten Farbmittel-Partikeln mit einem Teilchendurchmesser größer 200 nm, ermöglicht die Herstellung von farbreinen und effizienten Farbfilter, die bisher aufgrund der Lichtstreuung von Farbmittel-Partikeln dieses Teilchendurchmessers nicht realisiert werden konnten. Insbesondere können thermisch stabile und elektronenstrahlstabile Graufilter aus Oxiden hergestellt werden, die nicht mit einem Teilchendurchmesser kleiner 200 nm zur Verfügung stehen.

In einer bevorzugten Ausführungsform, enthält ein Farbfilter mindestens zwei Arten von Farbmittel-Partikeln.

Durch Verwendung von zwei oder mehr Arten von Farbmittel-Partikeln mit abgestimmtem Abstand ihrer Absorptionskanten kann auch ein Transmissionsfenster definiert werden.

Desweiteren betrifft die Erfindung ein Verfahren zur Herstellung eines Farbbildschirms mit einem Bildschirmglas, einer Leuchtstoffschicht und einem Farbfilter aus Farbmittel-Partikeln mit einem Teilchendurchmesser größer 200 nm zusammen mit kolloidalen Teilchen mit einem Teilchendurchmesser kleiner 100 nm zwischen Bildschirmglas und Leuchtstoffschicht, bei dem zunächst eine Schicht aus Farbmittel-Partikeln auf dem Bildschirmglas abgeschieden wird und dann die Räume zwischen den Farbmittel-Partikeln mit kolloidalen Teilchen aufgefüllt werden.

Im folgenden wird die Erfindung näher erläutert und es werden 6 Ausführungsbeispiele angegeben.

Zur Herstellung eines Farbfilters oder eines Graufilters werden die Farbmittel-Partikel in eine kolloidale Matrix eingebettet, das heißt das freie Volumen zwischen den Farbmittel-Partikeln wird mit kolloidalen Teilchen aufgefüllt. Der effektive Brechungsindex der Zwischenräume wird durch die geeignete Wahl der kolloidalen Teilchen an den Brechungsindex der Farbmittel-Partikel angepaßt. Es ist zu berücksichtigen, daß die Füllung der Zwischenräume im allgemeinen nicht vollständig erfolgt und der effektive Brechungsindex in den Zwischenräumen geringer ist als der Brechungsindex des reinen kolloidalen Sols. Bei geeigneter Auswahl der kolloidalen Teilchen und guter Füllung der Zwischenräume erhält man transparente Schichten aus Farbmittel-Partikeln, obwohl der Teilchendurchmesser der Farbmittel-Partikel größer als 200 nm ist.

Die Herstellung von Farb- bzw. Graufilterschichten mit einer Füllung der Zwischenräume durch kolloidale Teilchen kann prinzipiell nach zwei unterschiedlichen Verfahren erfolgen.

Im ersten Verfahren wird die zur Herstellung der Farb- bzw. Graufilterschicht vorgesehene Suspension aus Farbmittel-Partikeln mit einem geeigneten kolloidalen Sol oder mit mehreren geeigneten Solen gemischt. Dazu werden zunächst die Farbmittel-Partikel unter Zusatz eines Dispergiermittels in Wasser gemahlen. Anschließend werden Verunreinigungen und Agglomeraten, die nicht durch den Mahlprozeß zerkleinert wurden, beispielsweise durch Filtration entfernt. Zu der erhaltenen Suspension wird unter Rühren ein wäßriges Sol mit kolloidalen Teilchen gegeben. Diese Mischung wird auf der Innenseite eines Bildschirmglases beispielsweise mittels Spincoaten aufgebracht und getrocknet.

Nach einem zweiten Verfahren wird in einem ersten Prozeßschritt auf der Innenseite eines Bildschirmglases eine Farb- bzw. Graufilterschicht hergestellt. Dazu wird eine Suspension aus Farbmittel-Partikeln hergestellt, auf dem Bildschirmglas aufgebracht und getrocknet. Anschließend wird in einem zweiten Prozeßschritt diese Schicht aus Farbmittel-Partikeln mit einem kolloidalen Sol oder einer Mischung aus kolloidalen Solen getränkt und dadurch die Zwischenräume der Farbmittel-Partikel mit kolloidalen Teilchen gefüllt.

Bei diesem Verfahren ist es bevorzugt, daß die Suspension aus Farbmittel-Partikeln zur Herstellung der Farb- bzw. Graufilterschicht keine hohe Konzentration an gelösten Hilfsstoffen beispielsweise organischen polymeren Bindern wie Polyvinylalkohol enthalten. Diese gelösten Stoffe scheiden sich beim Trocknen der Farb- bzw. Graufilterschicht in den Zwischenräumen ab und verhindern das Auffüllen durch die kolloidalen Teilchen. Die Zusammensetzung der Suspension von Farbmittel-Partikeln ist deshalb vorteilhaft so zu wählen, daß die gelösten Anteile nicht mehr als 20 Volumenprozent der Farbmittel-Partikel ausmachen. Es ist vorteilhaft, das Volumenverhältnis von Farbmittel-Partikeln zu Binder auf 10 zu 1 zu begrenzen. Wenn der Einsatz von höheren Binderkonzentrationen notwendig ist, ist es vorteilhaft durch einen thermischen Vorbehandlungsschritt der Binder erst aus den Zwischenräumen entfernt werden, bevor diese mit den kolloidalen Teilchen gefüllt werden können.

Geeignete kolloidale Teilchen sind beispielsweise farblose Metalloxide ausgewählt aus der Gruppe SiO₂, ZrO₂, SnO₂, CeO₂ und ZnO. Die Aufzählung der geeigneten kolloidalen Teilchen ist nicht vollständig, sondern ist zu verstehen als Darstellung der Möglichkeiten, die sich dem auf diesem Gebiet erfahrenen Fachmann bieten. So können beispielsweise auch Phosphate und Sulfide mit den entsprechenden Eigenschaften als kolloidale Teilchen verwendet werden.

Viele der geeigneten kolloidalen Teilchen sind kommerziell als wäßrige Sole erhältlich. Andere kolloidale Teilchen sind als Pulver verfügbar und werden durch dispergieren in Wasser in kolloidale Sole überführt. Vorzugsweise geschieht dies durch Mahlen oder Ultraschallbehandlung.

Es kann sogar sehr vorteilhaft sein, farbige kolloidale Teilchen zu verwenden, die Licht im selben Spektralbereich wie die Farbmittel-Partikel absorbieren. Als geeignetes kolloidales Teilchen kann beispielsweise Fe₂O₃ verwendet werden.

Als Farbmittel-Partikel können Verbindungen wie beispielsweise das blaue Pigment Ultramarin, rote Oxynitridpigmente wie zum Beispiel Tantaloxynitrid oder Co-Fe-Oxide verwendet werden, die Teilchendurchmesser von größer 200 nm aufweisen.

Zur Herstellung des Farbbildschirms kann beispielsweise das Bildschirmglas zunächst mittels eines photolithographischen Verfahrens mit dem Muster einer Schwarzmatrix überzogen. Die Farb- bzw. Graufilterschichten werden nach einem der oben beschriebenen Verfahren derart auf dem Bildschirmglas aufgebracht, daß diese zwischen dem Bildschirmglas und dem entsprechenden Leuchtstoffraster positioniert sind. Danach werden die Raster der drei Primärfarben Blau, Rot und Grün Unter Benutzung von Suspensionen der Leuchtstoffe in drei aufeinanderfolgenden photolithographischen Schritten nach den bekannten Verfahren aufgebracht. Alternativ können die Leuchtstoffe auch in einem Druckverfahren aufgebracht werden. Der fertige, alle drei Farben und Farbfilterschichten umfassende Farbbildschirm kann für normale Anwendungen in Farbkathodenstrahlröhren oder Farbmonitoren mit einem Aluminiumfilm auf der Rückseite versehen werden.

Ein erfindungsgemäßer Farbbildschirm kann beispielsweise zur Herstellung einer Farbkathodenstrahlröhre, welche ein Gehäuse, eine Farbbildschirm, einen Hals und einem den Farbbildschirm mit dem Hals verbindenden Konus und eine im Inneren des Halses vorgesehene Elektronenkanone bzw.- schleuder zur Emission mindestens eines Elektronenstrahls aufweist, verwendet werden.

Desweiteren kann ein erfindungsgemäßer Farbbildschirm zum Beispiel auch zur Herstellung eines Plasmabildschirms, welcher einen Farbbildschirm, eine Rückplatte, eine Anzahl von dazwischen angeordneten, durch Trennwände getrennte, Gas enthaltene Plasmazellen, und ein oder mehrere Elektroden-Arrays zur Erzeugung von stillen elekrischen Ladungen in den Plasmazellen aufweist, verwendet werden.

Im folgenden werden Ausführungsformen der Erfindung erläutert, die beispielhafte Realisierungsmöglichkeiten darstellen.

### Ausführungsbeispiel 1

Zur Herstellung eines Graufilters wurde als färbender Partikel ein schwarzes Pigment, welches ein Mischphasenoxid mit Spinellstruktur der Formel Cu(Cr,Fe)₂O₄ ist, verwendet. Das Pigment wurde in einer Kugelmühle unter Zusatz des Dispergiermittels Poly(*N*,*N*-dimethyl-3,5-dimethylenpiperidinium)chlorid in Wasser gemahlen. Die wäßrige Suspension wurde filtriert, um Verunreinigungen und Agglomerate, die durch den Mahlprozeß nicht zerkleinert wurden, abzutrennen. Die Suspension wurde mit wäßrigem ZrO₂-Sol mit einem Teilchendurchmesser von 20 nm unter Rühren gemischt. Das Mischungsverhältnis von Pigment zu kolloidale Teilchen in der Suspension betrug 12.5 Gew.-% : 15 Gew.-%. Die Suspension wurde mittels Spincoaten auf einem Bildschirmglas aufgetragen und nach Trocknung wurde eine graue Schicht von 0.9 µm Schichtdicke erhalten. Diese wies eine deutlich höhere Transparenz als eine Vergleichsschicht auf, die ohne Zusatz kolloidaler Teilchen hergestellt wurde.

### Ausführungsbeispiel 2

Zur Herstellung einer blauen Farbfilterschicht wurde das blaue Pigment Ultramarin in einer Kugelmühle unter Zusatz eines Natriumsalzes einer Polyacrylsäure als Dispergiermittel in Wasser gemahlen. Die wäßrige Suspension wurde filtriert, um Verunreinigungen und Agglomerate, die durch den Mahlprozeß nicht zerkleinert wurden, abzutrennen. Die Suspension wurde mit einer Lösung aus Polyvinylalkohol und einer Natriumdichromat-Lösung unter Rühren gemischt. Das Mischungsverhältnis von Pigment zu Polyvinylalkohol in der Suspension betrug 10 Gew.-% : 1 Gew.-%. Die Suspension wurde mittels Spincoaten auf einem Bildschirmglas aufgetragen und nach Trocknung wurde eine stark lichtstreuende blaue Schicht von 2.9 µm Schichtdicke erhalten. Die Schicht wurde durch eine Maske mit UV-Licht bestrahlt und der Binder an den belichteten Stellen vernetzt. Anschließend wurden durch Sprühen mit warmem Wasser die nicht vernetzten Farbfilterflächen abgewaschen und getrocknet. Das resultierende Muster aus Ultramarinpigmentschicht wurde mit einem ZrO₂-Sol mit einem Teilchendurchmesser von 20 nm getränkt und der Überschuß an Sol durch Schleudern entfernt. Nach dem Trocknen und Ausheizen des Binders wurde eine transparente blaue Pigmentschicht erhalten.

### Ausführungsbeispiel 3

Eine analog dem Ausführungsbeispiel 2 hergestellte Farbfilterschicht mit Ultramarinpigment wurde mit einem ZrO₂-Sol getränkt, dessen Teilchendurchmesser 50 nm betrug. Nach dem Trocknen und Ausheizen des Binders wurde ebenfalls eine transparente blaue Pigmentschicht erhalten, die aber das Licht stärker streute, als die im Ausführungsbeispiel 2 beschriebene Farbfilterschicht.

### Ausführungsbeispiel 4

Eine analog dem Ausführungsbeispiel 2 hergestellte Farbfilterschicht mit Ultramarinpigment wurde mit einem ZnO-Sol getränkt, dessen Teilchendurchmesser 10 nm betrug. Nach dem Trocknen und Ausheizen des Binders wurde eine transparente blaue Pigmentschicht erhalten, deren Transparenz besser war als die der in Ausführungsbeispielen 2 und 3 beschriebenen blauen Farbfilter.

### Ausführungsbeispiel 5

Zur Herstellung einer grünen Farbfilterschicht wurde das grüne Mischoxidpigment (Co_{0.3}Ni_{0.5}Zn_{0.2})₂TiO₄ in einer Kugelmühle unter Zusatz eines Natriumsalzes einer Polyacrylsäure als Dispergiermittel in Wasser gemahlen. Die wäßrige Suspension wurde filtriert, um Verunreinigungen und Agglomerate, die durch den Mahlprozeß nicht zerkleinert wurden, abzutrennen. Die Suspension wurde mit einer Polyvinylalkohol-Lösung und einer Natriumdichromat-Lösung unter Rühren gemischt. Das Mischungsverhältnis von Pigment zu Polyvinylalkohol in der Suspension betrug 10 Gew.-% : 1 Gew.-%. Die Suspension wurde mittels Spincoaten auf einem Bildschirmglas aufgetragen und nach dem Trocknen wurde eine transparente grüne Schicht von 1.9 µm Schichtdicke erhalten. Die Schicht wurde durch eine Maske mit UV-Licht bestrahlt und der Binder an den belichteten Stellen vernetzt. Anschließend wurden durch Sprühen mit warmem Wasser die nicht vernetzten Farbfilterflächen abgewaschen und getrocknet. Die strukturierte Farbfilterschicht wurde mit einem ZnO-Sol mit einem Teilchendurchmesser von 10 nm getränkt und der Überschuß an Sol wurde durch Schleudern entfernt. Nach dem Trocknen und Ausheizen des Binders wurde eine transparente grüne Pigmentschicht erhalten.

### Ausführungsbeispiel 6

Zur Herstellung einer roten Farbfilterschicht wurde rotes Tantaloxynitrid TaON in einer Kugelmühle unter Zusatz eines Natriumsalzes einer Polyacrylsäure als Dispergiermittel und eines Antischaummittels in Wasser gemahlen. Die wäßrige Suspension wurde filtriert, um Verunreinigungen und Agglomerate, die durch den Mahlprozeß nicht zerkleinert wurden, abzutrennen. Eine weitere Suspension von kolloidalem Eisenoxid mit einem mittleren Teilchendurchmesser von 40 nm wurde entsprechend gemahlen und filtriert. Die Suspension des Oxynitridpigments wurde mit der kolloidalen Fe₂O₃-Suspension gemischt. Die erhaltene Suspension wurde mit einer alkalischen Lösung eines assoziativ verdickenden Copolymers versetzt. Die Pigmentkonzentration betrug 12.5 Gew.-%, das Mischungsverhältnis von Pigment zu kolloidale Teilchen betrug 4:1 und der Polymergehalt war 0.15 %. Die Suspension wurde mittels Spincoaten auf einem mit einer Photoresist-Schicht bereits vorstrukturierten Bildschirmglas aufgetragen. Die Schichtdicke betrug nach dem Trocknen 2.4 µm. Die restlichen Photoresistanteile wurden mitsamt der darauf abgeschiedenen Farbfilterschicht durch einen Entwicklungsschritt entfernt. Die auf dem Glas sehr gut haftenden rote Farbfilterschicht hatte eine hohe Transparenz.

## Patentansprüche

1. Farbbildschirm mit einem Bildschirmglas, einer Leuchtstoffschicht und einem Farbfilter zwischen Bildschirmglas und Leuchtstoffschicht,
dadurch gekennzeichnet,
daß der Farbfilter Farbmittel-Partikel mit einem Teilchendurchmesser größer 200 nm zusammen mit kolloidalen Teilchen mit einem Teilchendurchmesser kleiner 100 nm enthält.

2. Farbbildschirm nach Anspruch 1,
dadurch gekennzeichnet,
daß die kolloidalen Teilchen einen Teilchendurchmesser zwischen 10 und 50 nm aufweisen.

3. Farbbildschirm nach Anspruch 1,
dadurch gekennzeichnet,
daß die kolloidalen Teilchen einen Brechungsindex n_{D} > 1.4 aufweisen.

4. Farbbildschirm nach Anspruch 1,
dadurch gekennzeichnet,
daß die kolloidalen Teilchen Metalloxide enthalten.

5. Farbbildschirm nach Anspruch 4,
dadurch gekennzeichnet,
daß die Metalloxide ausgewählt aus der Gruppe SiO₂, ZrO₂, SnO₂, CeO₂ und ZnO sind.

6. Farbbildschirm nach Anspruch 1,
dadurch gekennzeichnet,
daß die Farbmittel-Partikel aus der Gruppe der anorganischen Pigmente, der organischen Pigmente, der anorganischen Farbstoffe und der organischen Farbstoffe ausgewählt sind.

7. Farbbildschirm nach Anspruch 1,
dadurch gekennzeichnet,
daß ein Farbfilter mindestens zwei Arten von Farbmittel-Partikeln enthält.

8. Verfahren zur Herstellung eines Farbbildschirms mit einem Bildschirmglas, einer Leuchtstoffschicht und einem Farbfilter aus Farbmittel-Partikeln mit einem Teilchendurchmesser größer 200 nm zusammen mit kolloidalen Teilchen mit einem Teilchendurchmesser kleiner 100 nm zwischen Bildschirmglas und Leuchtstoffschicht,
dadurch gekennzeichnet,
daß zunächst eine Schicht aus Farbmittel-Partikeln auf dem Bildschirmglas abgeschieden wird und dann die Räume zwischen den Farbmittel-Partikeln mit kolloidalen Teilchen aufgefüllt werden.
